# EUROPEAN PATENT APPLICATION

(11) **EP 0 922 605 A2**
(43) Date of publication of application: **16.06.1999**
(21) Application number: 98310108.0
(22) Date of filing: 10.12.1998
(51) Int. Cl.: B60N 2/00

(54) **Improvements relating to furniture anchorages**

(30) Priority: 10.12.1997 GB 9726022; 26.11.1998 GB 9825834
(71) Applicant: C.N. UNWIN LIMITED, Yeovil, Somerset BA22 8RP (GB)
(72) Inventor: Coates, Richard Geoffrey, Nr. Yeovil, Somerset BA22 8UD (GB)
(74) Representative: Lainé, Simon James

(57) **Abstract**

A furniture anchorage, particularly for seats, is designed to co-operate with a floor track with a regular array of apertures (1) joined by undercut slots (2). A bar (3) or tube (32) overlies the track and has inverted mushroom studs (5, 14, 30, 40, 43, 43') whose heads enter the track through the apertures and then engage under the lips of the slots (2) when the bar or tube (3, 32) is shifted longitudinally. A plunger (13, 39) is then lowered into one of the apertures (1) to lock the anchorage and, in its lowered position, is rotated. This entrains an assembly (9, 16, 53, 56) which wedges up some of the studs (14, 40) otherwise spring urged (24, 64) downwardly.

## Description

This invention relates to furniture anchorages, particularly for vehicle seats which have to be firmly held but adjustable.

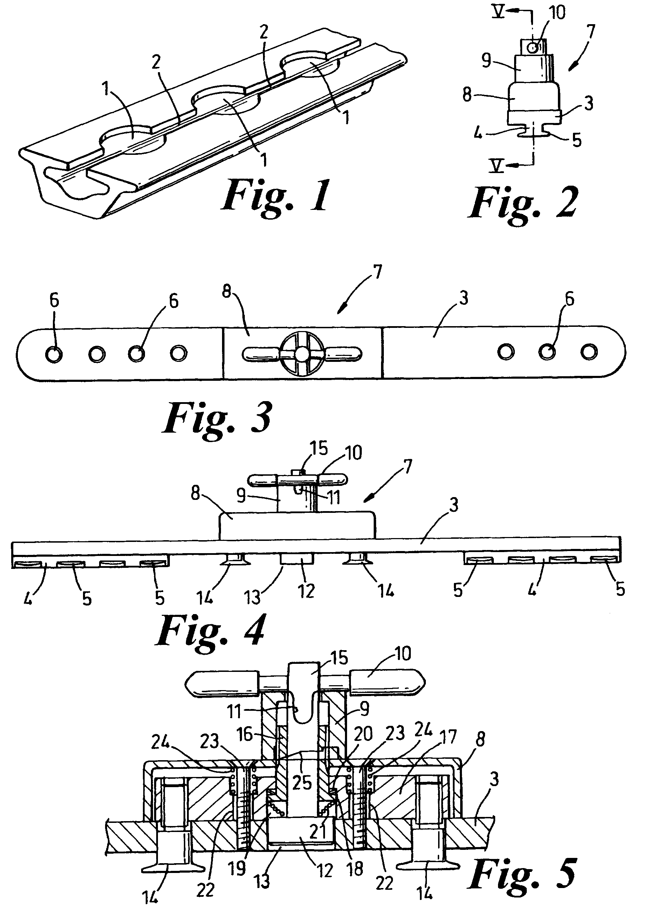

There is a standard type of floor track which is illustrated in Figure 1 of the accompanying drawing. It is fitted substantially flush with the floor and presents a regular array of circular apertures 1 joined by undercut slots 2 aligned with the centres of the apertures. Inverted mushroom-shaped studs on the undersides of a seat frame enter these apertures and then the frame is shifted length-wise of the track so that the stems of the studs are within the slots 2 and their heads are trapped below the undercut formations. Then a locking plunger carried by the seat frame is lowered into an aperture 2 to stop the frame shifting. Such anchorages are described, for example, in GB-A-2153215, GB-B-2219493 and EP-A-0709247.

A problem with the anchorage described in GB-A-2153215 is that it did not always locate tightly to the floor track, and it tended to rattle. GB-B-2219493 proposed a solution in which, having lowered the plunger, the operator rotates a disc with wedge or cam surfaces that forces some studs up against the undercut formations of the track. But having to manipulate two distinct elements, often in an awkward position under a seat, is not ideal. EP-A-0709247 suggests using the handle which operates the plunger to wedge the studs or their equivalents up. But this relies on the plunger engaging the base of the track and entails trying to lift the entire seat structure, or at least one side of it, to make the studs jam.

It is the aim of this invention to have a single operating element for the operator to use both in lowering the plunger and for wedging, and to avoid the drawback of EP-A-0709247 outlined above.

According to the present invention there is provided a furniture anchorage for a track of the kind having a regular aligned array of apertures interposed by narrower slots defined and flanked by undercut formations, the anchorage comprising a plurality of elements below a base member that overlies the track capable of simultaneous close passage down through a corresponding number of said apertures, the base member then being capable of longitudinal movement to trap said elements below the undercut formations, and a plunger carried by the base member engageable in one of said apertures after such longitudinal movement to lock the base member against further such movement, wherein at least one said element is spring urged downwardly and the plunger is operable by an actuator at its upper end, above the base member, the actuator being:
(a) raisable and rotatable to a first angular position where it maintains the plunger raised,
(b) rotatable while so raised from the first to a second angular position, whence the plunger can descend to its locking position, and
(c) rotatable from the second angular and lowered position to cause the or each spring biased element to be wedged upwards to jam against the undercut formation.

The plunger will generally be spring-biased downwardly as well, and preferably there will be an even number of spring biased elements distributed symmetrically either side of the plunger. They can all be mounted on a common member to which the spring bias is applied, and conveniently this will be within a housing fixed to or formed by the base member, the spring means also being concealed inside. Other said elements may be on other downwardly spring urged members that co-operate with the ends of said common member. When that is wedged up, it also raises the adjacent ends of those other members, and this can give additional jamming.

The actuator will conveniently act through an intermediate assembly which guides the plunger. A basic form of actuator is a cross pin at the top of the stem of the plunger which will either rest on top of the intermediate assembly (mode (a)) or seat in diametrically opposed notches in the top end of that assembly (mode (b)). The intermediate assembly can bear on cam surfaces which wedge the assembly upwards as it is rotated by the actuator, the intermediate assembly carrying with it the or each spring biased element (mode (c)). At its lower end, the assembly can pass through and engage under the common member carrying said elements. Therefore, as the cylindrical assembly is wedged up, so those elements are forced upwardly.

Alternatively, the intermediate member may have cam surfaces which, as the assembly is rotated by the actuator, wedge under and raise a member carrying the or each spring biased element (mode (c)).

For more comfortable use, the cross pin actuator may be replaced by a cylindrical knob which fits closely over the assembly. The user therefore manipulates the knob rather than the projecting ends of a pin.

For a better understanding of the invention some embodiments will now be described, by way of example, with reference to the remaining figures of the accompanying drawings, in which:
Figure 2 is an end view of an anchorage device,
Figure 3 is a plan view of the anchorage device,
Figure 4 is a side view of the anchorage device,
Figure 5 is an enlarged vertical section on the line V-V of Figure 2 showing a locking plunger assembly,
Figure 6 is an exploded perspective view of the central part of the anchorage device,
Figure 7 is a section similar to Figure 5 showing an alternative locking plunger assembly and extended to show an alternative extremity of the anchorage device,
Figure 8 is a top plan view of another anchorage device,
Figure 9 is an underneath plan view of that device, omitting an operating knob,
Figure 10 is a longitudinal vertical section on the Line X-X of Figure 8,
Figure 11 is stepped cross section on the line XI-XI of Figure 10, and
Figure 12 is an enlarged detail of Figure 10.

At each side of a seat, legs (not shown) are bolted through their base flanges to a horizontal flat bar 3 which will overlie a track of the kind shown in Figure 1. The bar has on its underside, one at each end, two elongate blocks 4, conveniently castings. Their width is such that they will just fit in the slots 2, while along their bottom edges there are laterally projecting lunes 5 which are regularly spaced and sized so that they will just pass through the apertures 1. When the seat is shifted lengthwise of the track, there will (in this example) be the equivalent of eight mushroom studs securely trapped on each side of the seat.

The bar 3 offers a number of screw-threaded holes 6 at each end for different sizes and types of seat or other fitting to be anchored.

A locking assembly 7 for this bar is at about its mid-length. Externally visible there is an elongate cover or housing 8 on top of the bar 3, surmounted by a squat vertical cylinder 9 on whose upper end an operating handle 10 in the form of a transverse bar bears. This upper end has diametrically opposed notches 11 which can receive the handle 10 when turned transversely to the bar 3, the handle then being in a lowered, locking position. Below the bar 3 there is visible the head 12 of a plunger 13 (when the handle 10 is in the lowered position to be described below) and two inverted mushroom studs 14 flanking the plunger and spaced to register with apertures 1 when the lunes 5 so register. The plunger 13 is "out of phase" with the studs 14 and can only enter an aperture 1 when those studs are within the slots 2.

Referring now to Figure 5, the plunger 13 has a stem 15 which extends up from its head 12 through the cover 8 and cylinder 9, the handle 10 being fixed transversely through its upper end.

The stem 15 is not directly guided by the cover 8 but by a bush 16, whose upper end screws into the cylinder 9 after passing up through the centre of an elongate block 17 and the top of the cover 8. The lower end of the bush 16 has an external annular rib 18 which is within an underside recess 19 of the block 17. The upper side of the rib 18 compresses wavy washers 20 against the base of the recess 19 as the screw joint between the bush 16 and cylinder 9 is tightened on assembly, while between the underside of the rib 18 and the back of the plunger head 10 a spring 21 acts to urge the plunger 13 downwards.

The block 17 carries the studs 14 at opposite ends, their stems extending freely down through the bar 3. Further towards the centre, the block 17 has counterbored passages 22 through which extend screws 23 holding the cover 8 in place on the bar 3. Around the upper portions of these screws there are springs 24 acting between the upwardly facing shoulders within the passages 22 and the underside of the cover 8.

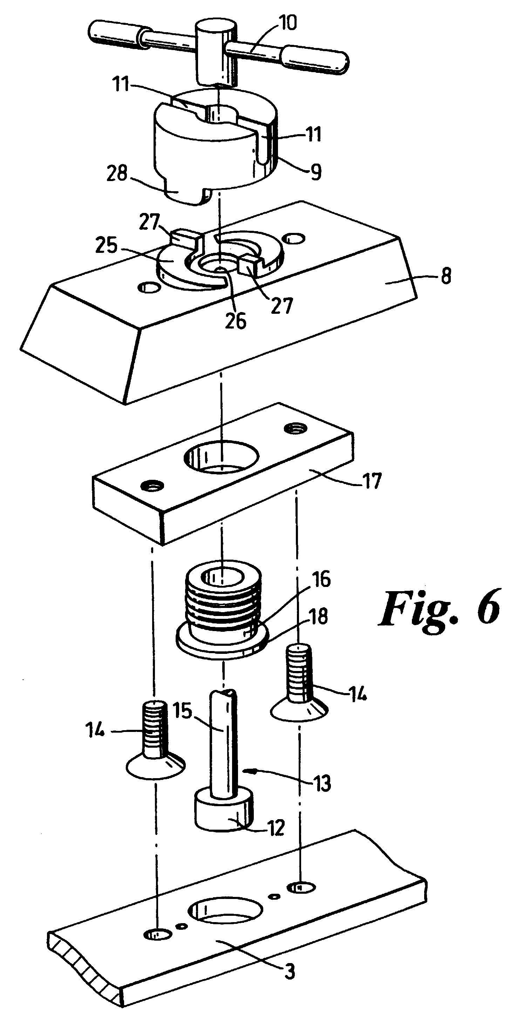

Referring now to Figure 6, where the bush 16 passes through the cover 8, the upper face of that cover has two crescent shaped cams 25 surrounding the aperture 26 for the bush, leading up to abutments 27. The underside of the cylinder 9 has diametrically opposed lugs 28 (only one of which is visible) and these bear on the cams 25 and co-operate with the abutments 27 as described below.

As shown in Figure 5, the plunger 11 is in the unlocking position, with the block 17 resting on the bar 3 and the studs 14 in their lowermost position where they can move freely along the rail. If the handle 10 is rotated from the Figure 5 position so that it registers with and engages in the notches 11, the plunger 13 will be urged down by the spring 21. If the head 12 is opposite an aperture 1, the bar 3 will be locked. If the handle 10 is then turned further it will rotate the bush 16 and the lugs 20 co-operating with the cams 25 will wedge the bush 16 (and the handle 10) upwards. The rotation is limited by the abutments 27. The bush carries the block 17 and the studs 14 with it, compressing the springs 24, and so the studs 14 will thereby be urged up against the undercuts of the rail and jam the locking assembly. Any potential rattling should then be prevented.

To release, the handle 10 is turned back again, easing the lugs 28 down the cams 25, and then pulled up, withdrawing the plunger head 12 from the rail and the handle 10 from the notches 11. If it is then twisted and released, the handle 10 will bear on top of the cylinder 9, keeping the plunger 13 raised. The bar 3 can then be shifted lengthwise and removed from the rail.

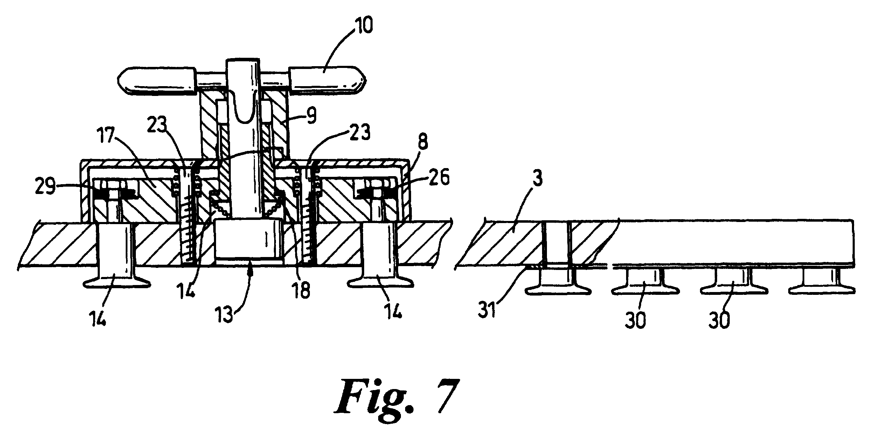

Figure 7 shows a modification of Figure 5. The studs 14 are here spring mounted to the block 17, using disc springs 29. The wavy washers 20 are no longer provided and the rib 18 bears directly on the base of the recess 19. The bar 3 is considerably deeper and there are no blocks 4. Instead there are inverted mushroom studs 30 screwed into the bar 3, possibly with the interposition of a shim 31.

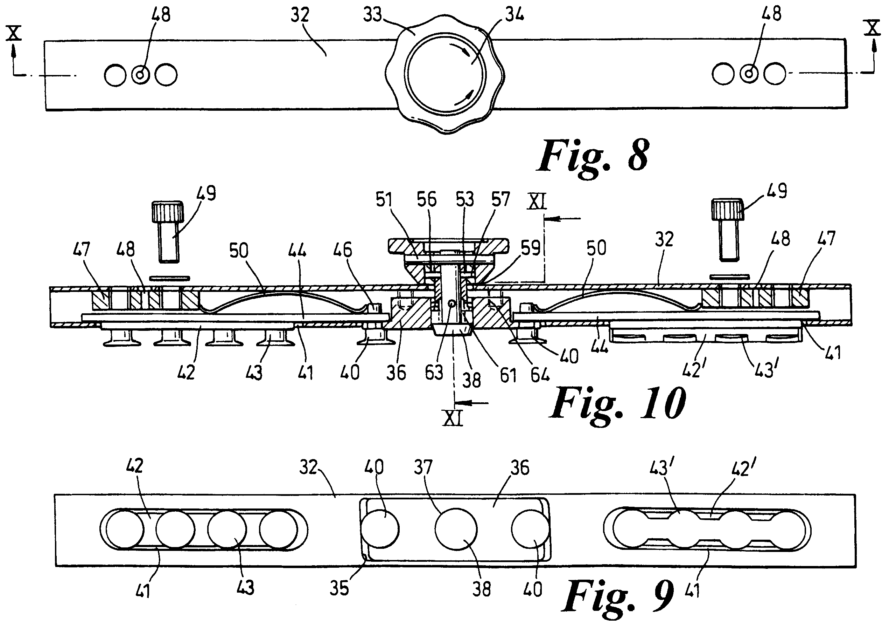

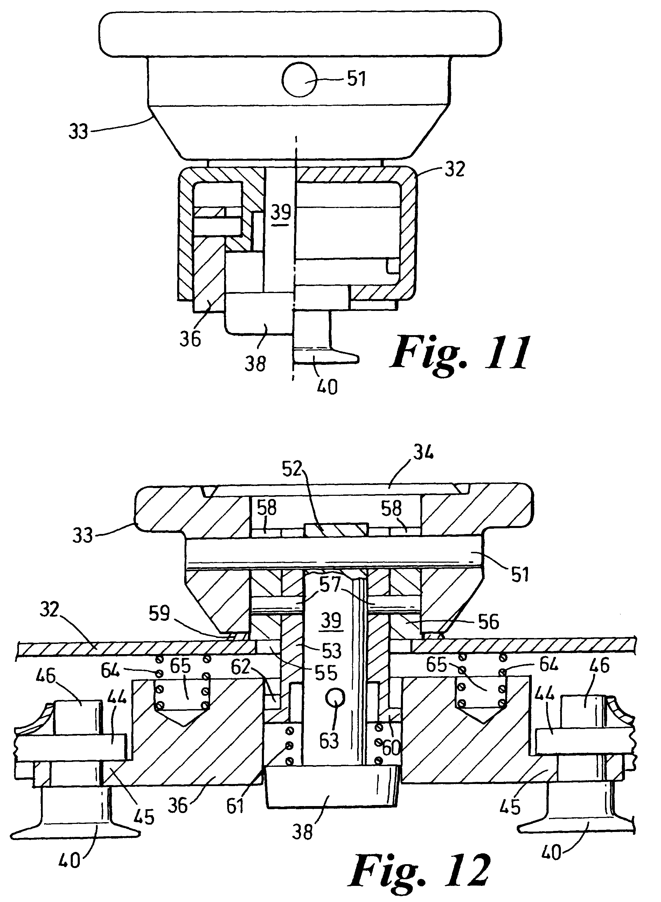

Referring now to figures 8 to 12, in this embodiment instead of a flat bar 3 there is rectangular section tube 32 which conceals most of the mechanism, leaving an operating knob 33 visible at mid-length on top. This is capped by an indicator label 34. Underneath, there is a central rectangular window 35 in which the base of a spring block 36 easily fits. This has a central aperture 37 for the head 38 of a plunger 39, and at each end of the block 37 there are inverted mushroom studs 40. There are further elongate windows 41 near each end, and these house, with clearance, a plate 42 with screw-in inverted mushroom studs 43 (as seen at the left hand end) or a block 42' with cast lunes 43' (as seen at the right hand end). Each plate 42 or block 42 is secured to the underside of a longer plate 44 which spans the respective window 41 and extends towards the block 36, overlapping a flange 45 at the end of that block. The stem 46 of the associated stud is screwed through this flange, or otherwise fixed to it, and above the flange 45 the stem 46 extends freely through an aperture in the end of the plate 44 to project above that and form an abutment.

Towards each end of the tube 32 a block 47 is secured within it, held up against its upper side by a rivet 48. Screws 49 (only two of which are shown) engage in these blocks 47 to fasten the feet of a seat (not shown) to the tube 32. The inner end of each block 47 forms another abutment and between that and the associated stem 46 there is disposed a leaf spring 50 acting at its ends on the bar 44 and at its centre on the underside of the top of the tube 32. The bar 44 and its associated studs 40 and 43 can therefore "float" vertically to a limited extent.

Turning now to the assembly associated with the knob 33, the knob itself is secured to the plunger 39 by a cross-pin 51 through the top of the stem 52 of the plunger. That stem 52 is slidably inserted in a bush 53 which extends freely up through an aperture 55 in the top of the tube 32. An actuator ring 56 which is a sliding fit within the knob 33 encircles the upper end of the bush 53 and is secured to it by opposed radial pins 57. The upper end of this assembly 53, 56 has notches 58 in which the cross-pin 51 can seat. The ring 56 is of slightly larger diameter than the aperture 55 and a thrust plate 59 is interposed between it and the top of the tube 32.

The bush 53 has an outwardly projecting flange 60 at its lower end and a spring 61 acts between the underside of that and the head 38 of the plunger. The upper side of the flange 60 has two arcuate cam surfaces 62, and on these bear short pins 63 projecting in from the sides of the block 36. This block is urged downwardly by springs 64 acting against the underside of the top of the tube 32 and largely housed in recesses 65.

The knob 33 can be raised from the position shown and turned so that the pin 51 will bear on the upper end of the bush assembly 53, 56. The spring 61 will be compressed by the retracted plunger head 38 and the bush assembly 53, 56 will remain as shown.

With the knob 33 turned so that the pin 51 enters the notches 58, the plunger 38 will project below the block 36. Turning the knob 33 turns the bush assembly 53, 56, wedging the cam surfaces 62 under the pins 63. This draws the block 36 up, carrying with it the adjacent studs 40. These studs will therefore be jammed up under the lips of the rail, securing the anchorage against rattling.

The adjacent ends of the plates 44 will also be raised, giving them a slight tilt in the longitudinal direction. There can therefore be some further jamming from the studs 43 or lunes 43', particularly the ones nearest the plunger assembly.

## Claims

1. A furniture anchorage for a track of the kind having a regular aligned array of apertures interposed by narrower slots defined and flanked by undercut formations, the anchorage comprising a plurality of elements below a base member that overlies the track capable of simultaneous close passage down through a corresponding number of said apertures, the base member then being capable of longitudinal movement to trap said elements below the undercut formations, and a plunger carried by the base member engageable in one of said apertures after such longitudinal movement to lock the base member against further such movement, wherein at least one said element is spring urged downwardly and the plunger is operable by an actuator at its upper end, above the base member, the actuator being:
(a) raisable and rotatable to a first angular position where it maintains the plunger raised,
(b) rotatable while so raised from the first to a second angular position, whence the plunger can descend to its locking position, and
(c) rotatable from the second angular and lowered position to cause the or each spring biased element to be wedged upwards to jam against the undercut formation.

2. A furniture anchorage as claimed in Claim 1, wherein the plunger is spring biased downwardly.

3. A furniture anchorage as claimed in Claim 2, wherein there is an even number of spring biased elements distributed symmetrically either side of the plunger.

4. A furniture anchorage as claimed in Claim 3, wherein the elements are mounted on a common member to which the spring bias is applied.

5. A furniture anchorage as claimed in Claim 4, wherein the common member is within a housing fixed to or formed by the base member, the spring means also being concealed inside.

6. A furniture anchorage as claimed in claim 4 or 5, wherein other said elements are on other downwardly spring urged members that co-operate with the ends of said common member, the wedging up of said common member also raising the adjacent ends of said other members.

7. A furniture anchorage as claimed in any preceding Claim wherein the actuator operates through an intermediate assembly which guides the plunger.

8. A furniture anchorage as claimed in Claim 7, wherein the actuator is a cross pin at the top of the stem of the plunger which will either rest on top of the intermediate assembly (mode (a)) or seat in diametrically opposed notches in the top end of the intermediate assembly (mode (b)).

9. A furniture anchorage as claimed in Claim 7 or 8, wherein the intermediate assembly bears on cam surfaces which wedge the assembly upwards as it is rotated by the actuator, carrying with it the or each spring biased element (mode (c)).

10. A furniture anchorage as claimed in Claim 9 as appendant to Claim 4, wherein at its lower end the intermediate assembly passes through and engages under the common member carrying said elements.

11. A furniture anchorage as claimed in Claim 7 or 8, wherein the intermediate assembly has cam surfaces which, as the assembly is rotated by the actuator, wedge under and raise a member carrying the or each spring biased element (mode (c)).

12. A furniture anchorage as claimed in any one of Claims 8 to 11, wherein the cross pin actuator diametrically spans a cylindrical knob which fits closely over the intermediate assembly.
